# EUROPEAN PATENT APPLICATION

(11) **EP 1 912 056 A1**
(43) Date of publication of application: **16.04.2008**
(21) Application number: 06021463.2
(22) Date of filing: 13.10.2006
(51) Int. Cl.: G01N 15/02

(54) **Method and apparatus for evaluating contamination measurements**

(71) Applicant: HYDAC FILTERTECHNIK GMBH, 66280 Sulzbach/Saar (DE)
(72) Inventor: Busch, Andreas, 66571 Eppelborn (DE)
(74) Representative: Bartels & Partner

(57) **Abstract**

A method for evaluating contamination measurement values of solid particle (6) contamination in fluids in a system (1), in particular in hydraulic and/or lubricating fluids, wherein said contamination measurement values being represented by counting, within a volume of said fluid, at least one number of particles (6) having a particle size in at least one predetermined particle size range, said method for evaluating comprising the steps of: comparing said counted number with at least one predetermined threshold value (22, 24, W, A, S) resulting in a present comparison result, reading a previous comparison result corresponding to a previous counted number from a history file, choosing an appropriate control signal to control said system (1), said choice being based on said present comparison result and at least one previous comparison result.

## Description

### BACKGROUND ART

Contamination and degraded fluid quality cause inefficient operation, component wear and eventually failures in hydraulic and lubrication systems. Counter measures to act against these unwanted occurrences include installation or upgrading of a filtration and also contamination measurements, including solid contamination measurements, or continuous monitoring of the fluid conditions. Money invested in contamination measurement and contamination control can easily be justified when the resulting machine availability increases significantly.

In contrast to simply adding supplementary filtration, contamination measurements or a continuous monitoring of the fluid conditions will allow reacting in time and with the appropriate measures according to the contamination in hydraulic and lubricating fluids and to the needs of the system.

### DISCLOSURE

It is an object of the invention to provide a method and apparatus for evaluating contamination measurements of solid particle contamination in hydraulic and lubricating fluids providing a high reliability and high adaptability of the processing of measurement results and the measures undertaken in response to the measurement results. It is a further object of the invention to provide a cost-effective solution to the increasing needs of the cleanliness of hydraulic and lubricating fluids in today's industry. It is a further object of the invention to provide a software program or product for controlling or executing the method for evaluating contamination measurements.

In an embodiment of the invention, a method for evaluating contamination measurement values of solid particle contamination in fluids in a system, in particular in hydraulic and/or lubricating fluids, wherein said contamination measurement values being represented by counting, within a volume of said fluid, at least one number of particles having a particle size in at least one predetermined particle size range, said method for evaluating comprising the steps of: comparing said counted number with at least one predetermined threshold value resulting in a present comparison result, reading a previous comparison result corresponding to a previous counted number from a history file, choosing an appropriate control signal to control said system, said choice being based on said present comparison result and at least one previous comparison result.

In an embodiment of the invention said at least one predetermined threshold value represents a cleanliness level which is chosen to be within a calibrated range for which said counted number is valid.

In an embodiment of the invention a first threshold value is chosen to be equal to a lower end of said calibrated range corresponding to a high cleanliness of said fluid.

In an embodiment of the invention for the case that said present comparison result corresponds to a cleanliness better than said calibrated range and at least one of said previous counted numbers have been close to said first threshold value, a signal is generated indicating that the cleanliness being better than said first threshold value.

In an embodiment of the invention a second threshold value is chosen to be equal to an upper end of said calibrated range corresponding to a low cleanliness of said fluid.

In an embodiment of the invention for the case that said present comparison result corresponds to a cleanliness worse than said calibrated range and at least one of said previous counted numbers have been close to said second threshold value, a signal is generated indicating that the cleanliness being worse than said second threshold value.

In an embodiment of the invention an alarm message concerning severe fluid contamination is initiated and/or an alarm action is initiated, in particular an alarm action to stop said system after completion of a working-cycle of said system.

In an embodiment of the invention at least one further threshold value is arranged between said first and said second threshold value, preferably a third threshold value W(arning), a fourth threshold value A(larm), and a fifth threshold value S(top) are arranged between said first and said second threshold value to define limits for an initiation of a display of cleanliness, and/or initiation of status messages like NORMAL, WARNING, ALARM or STOP, and/or of actions like "check fluid" or "stop machine".

In an embodiment of the invention the initiation of an action is triggered only if a settable number of consecutive comparison results are equal.

In an embodiment of the invention said contamination measurement values are stored with time and date information into said history file.

In an embodiment of the invention flow rate errors of said fluid are only displayed when occurring during multiple consecutive measurement periods, e.g. during more than five or ten consecutive measurement periods while the system is working. In an embodiment of the invention flow rate errors of said fluid are only displayed when occurring during twenty consecutive measurement periods while the system is working.

In an embodiment of the invention an apparatus for evaluating contamination measurement values of solid particle contamination in fluids in a system, in particular in hydraulic and/or lubricating fluids, wherein said contamination measurement values being represented by counting, within a volume of said fluid, at least one number of particles having a particle size in at least one predetermined particle size range, said apparatus comprising: means for comparing said counted number with at least one predetermined threshold value resulting in a present comparison result, means for reading a previous comparison result of at least one previous counted number from a history file, means for choosing an appropriate control signal to control said system, said choice being based on said present comparison result and at least one previous comparison result. In an embodiment said means for comparing, reading and choosing are incorporated in an Electronic Data Processing (EDP) unit controlled by a software programm and/or input/output units.

In an embodiment of the invention a software program or product, is preferably stored on a data carrier, for controlling or executing the above described method, when run on a data processing system such as a computer.

In an embodiment of the invention a measurement cycle time t_{c} during which a measurement of at least one number of particles having a particle size in at least one predetermined particle size range is settable. In an embodiment of the invention a measurement cycle time t_{c} during which a measurement at least one number of particles having a particle size in at least one predetermined particle size range is set to about one minute.

In an embodiment of the invention said contamination measurement values being represented by counting, within a volume of said fluid, at least one number of particles having a particle size in at least one predetermined particle size range and the at least one number of particles is converted into ISO 4406 class or ISO 4406 level. Cleanliness levels being defined by three numbers divided by slashes (/). These numbers correspond to minimum particle sizes of 4, 6, and 14 micron, in that order. Each number refers to an ISO Range Code, which is determined by the number of particles for the corresponding minimum particle size being present in 1 ml of said fluid. Each range is double the range below.

In an embodiment of the invention said contamination measurement values being represented by counting, within a volume of said fluid, at least one number of particles having a particle size in at least one predetermined particle size range and the at least one number of particles is converted into SAE AS 4059(D) class or SAE AS 4059(D) level.

In an embodiment of the invention said contamination measurement values either as said counted number of particles or converted into ISO 4406 and/or SAE AS 4059(D) class can be transmitted to a computing device, in particular a Personal Computer, via an RS232 interface and/or via an RS232C interface and/or via an RS485 interface, providing the user with flexibility in analysis. In an embodiment of the invention said contamination measurement values either as said counted number of particles or converted into ISO 4406 and/or SAE AS 4059(D) class can be outputted to Programmable logic controllers (PLC), and/or to customer supplied local display and/or class display (PLC), and/or via an input/output unit as a standard current signal of e.g. 4mA to 20mA and/or a standard voltage signal of e.g. 0 Volts to 10 Volts.

In an embodiment of the invention said contamination measurement values either as said counted number of particles or converted into ISO 4406 and/or SAE AS 4059(D) class can be outputted to a DIN-Messbus, and/or to a Local Area Network, and/or to Ethernet, and/or to a 6-digit ISO code display.

In an embodiment of the invention said apparatus for evaluating contamination measurement values of solid particle contamination in fluids in a system, in particular in hydraulic and/or lubricating fluids, can be combined with a filter unit and/or control unit of filtration, and/or integrated into industrial hydraulic systems, in particular integrated in Monitoring Systems via a 4mA to 20mA interface.

In an embodiment of the invention said apparatus for evaluating contamination measurement values of solid particle contamination in fluids in a system, in particular in hydraulic and/or lubricating fluids, comprises a continuously executed self-diagnosis with error indication via one or more status LED and/or a display.

Embodiments of the invention can be partly or entirely embodied or supported by one or more suitable software programs, which can be stored on or otherwise provided by any kind of data carrier, and which might be executed in or by any suitable data processing unit.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 shows an embodiment of the invention embedded in a hydraulic or lubrication system.

Fig. 2 shows an illustration of an embodiment of the invention.

Fig. 3 shows a table for clarification of threshold values incorporated in an embodiment of the invention.

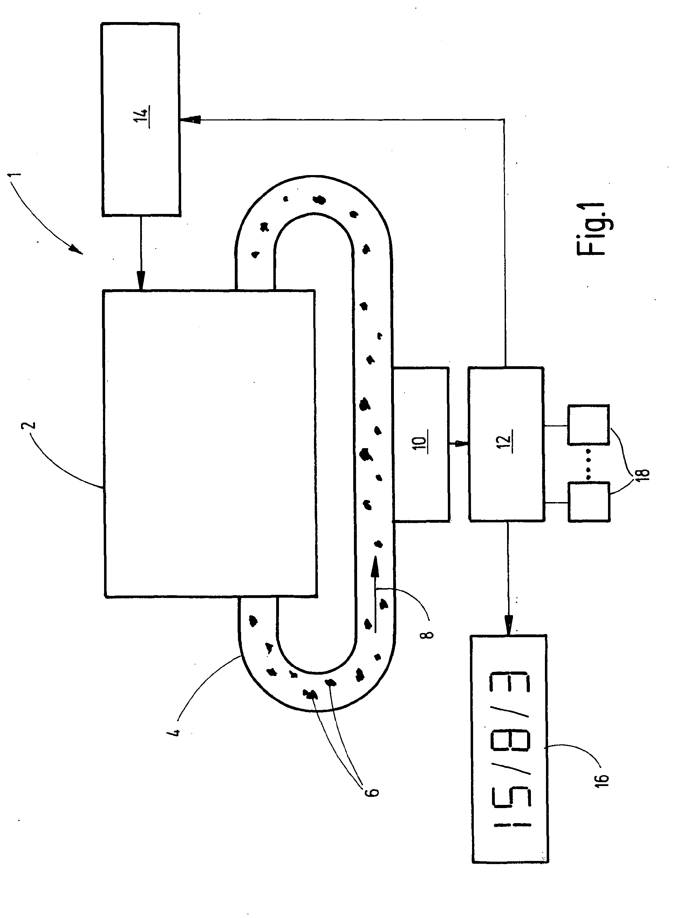

Fig. 1 shows an embodiment of the invention embedded in a hydraulic or lubrication system 1 wherein a machine 2 is supplied with a hydraulic and/or lubricating fluid flowing in line 4. In the direction of arrow 8 said fluid passes the particle counter 10 which counts solid particles 6 which contaminate the fluid.

Although not shown in fig. 1, a filtration may happen by a filtration unit through which the fluid flows. Line 4 may also be not the main line for conducting the fluid but may represent a lower volume bypass line connected to the main line in such a way that the fluid in the bypass line shows the same contamination as the fluid in the main line.

The particle counter 10 outputs counted numbers of particles 6 to the electronic data processing (EDP) unit 12 which incorporates most of the data processing needed for the inventive method for evaluating contamination measurement values of solid particles 6 contamination in fluids. An output of EDP unit 12 is connected to control unit 14 which controls, at least in part, the machine 2. An output of EDP unit 12 may also control a filtration unit not shown in system 1.

A further output of EDP unit 12 is connected to a display unit 16 used to display contamination values and further information like messages informing about the severeness of the contamination of the fluid as well as general status messages concerning the status of said particle counter 10 and/or said EDP unit 12. One or more input/output units 18 may be connected to said EDP unit 12. At least one input/output unit 18 may comprise control buttons to control said EDP unit 12; a further input/output unit 18 may comprise interfaces like serial interfaces, and/or parallel interfaces, and/or wireless interfaces, and/or local area network (LAN) interfaces, and/or Ethernet interfaces.

A further application of input/output units 18 are signal sources which output contamination measurement values represented by a standard signal like 4 to 20 mA, and/or 0 to 10 V, and/or similar. Such a standard signal can be used for a transfer over long distances for control of distant systems or machines and/or for further processing of the data represented by the standard signal. Even error signals or signals describing the status of said particle counter 10 and/or of said EDP unit 12 can be transferred in this way as additional information.

The analog signal provided by at least one of said input/output units 18 shown in fig. 1 describes the cleanliness level of the fluid by representing the cleanliness class according to ISO 4406 (1999), and/or to ISO 4406 (1992), and/or to SAE AS 4059(D), and/or to NAS 1638 standards.

The ISO code ISO 4406 (1999) signal consists of three measured values and is time-coded. Here shown is a case for an analog signal from 4 mA to 20 mA which represents the cleanliness class according to ISO4406 (1999). First an identifier for particle size range > 4 µm (c) is generated by a current of 19,2 mA for 300 msec and a current of 4,8 mA for 300 msec. Then a current for the measured number of particles 6 with particle sizes greater than 4 µm (c) or a representation of this number is generated for 3,000 msec. Second an identifier for particle size range > 6 µm (c) is generated by a current of 19,2 mA for 300 msec and a current of 4,8 mA for 300 msec (two times). Then a current for the measured number of particles 6 with particle sizes greater than 6 µm (c) or a representation of this number is generated for 3,000 msec. Third an identifier for particle size range > 14 µm (c) is generated by a current of 19,2 mA for 300 msec and a current of 4,8 mA for 300 msec (three times). Then a current for the measured number of particles 6 with particle sizes greater than 14 µm (c) or a representation of this number is generated for 3,000 msec.

An adequate reference between current and ISO-class is chosen to guarantee a high resolution and signal integrity of the analog signal provided by said input/output unit 18. A factory set sampling rate (one measurement cycle time t_{c}) is set to 1 min. The calibration range is within the range class ISO 13/11/10 to ISO 23/21/18 with an accuracy of +/-½ class.

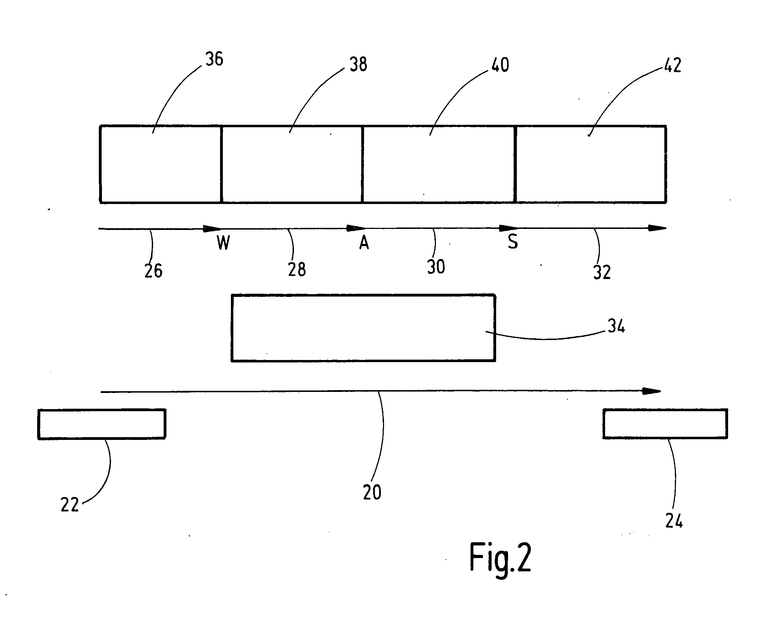

Fig. 2 shows an illustration of an embodiment of the invention. In the lower part of fig. 2 the scale 20 represents the calibrated range from a first threshold value 22 to a second threshold value 24 for which a counted number of solid particles 6 (not shown in fig. 2) delivered by the particle counter 10 (not shown in fig. 2) is valid. In the upper part of fig. 2 the scale 20 is divided into a first part 26 of scale 20 up to a third threshold value W where a second part 28 of scale 20 joins up to a fourth threshold value A followed by a third part 30 of scale 20 up to a fifth threshold value S and finally a fourth part 32 of scale 20 completes the subdivided representation of scale 20. Each part 26, 28, 30, 32 of scale 20 corresponds to one of a relating first message 36, second message 38, third message 40, and fourth message 42. An actual read out 34 indicates contamination measurement values and/or first to fourth messages 36, 38, 40, 42.

The cleanliness class chosen for the first threshold value 22, the second threshold value 24, the third threshold value W, the fourth threshold value A, and the fifth threshold value S are set by the manufacturer of machine 2 and are based on the components to be used in the hydraulic system. In an embodiment of the invention the set-up of the threshold values is as shown in fig. 2, where the first threshold value 22 is set to ISO 13/11/10, and the second threshold value 24 is set to ISO 23/21/18, whereas the third threshold value W (warning) is set greater than the first threshold value 22, the fourth threshold value A (alarm) being greater than the third threshold value W, and the fifth threshold value S (stop) being greater than the fourth threshold value A (alarm). The fifth threshold value S is smaller than the second threshold value 24.

Fig. 2 shows, which message 36, 38, 40, 42 will be generated, depending upon the present cleanliness class for the contamination measurement values. For the first part 26 of scale 20 a first message 36 indicating "normal" will be generated. For the second part 28 of scale 20 a second message 38 indicating "warning" will be generated. For the third part 30 of scale 20 a third message 40 will be generated indicating "alarm". For the fourth part 32 of the scale 20 a fourth message 42 "stop" will be generated.

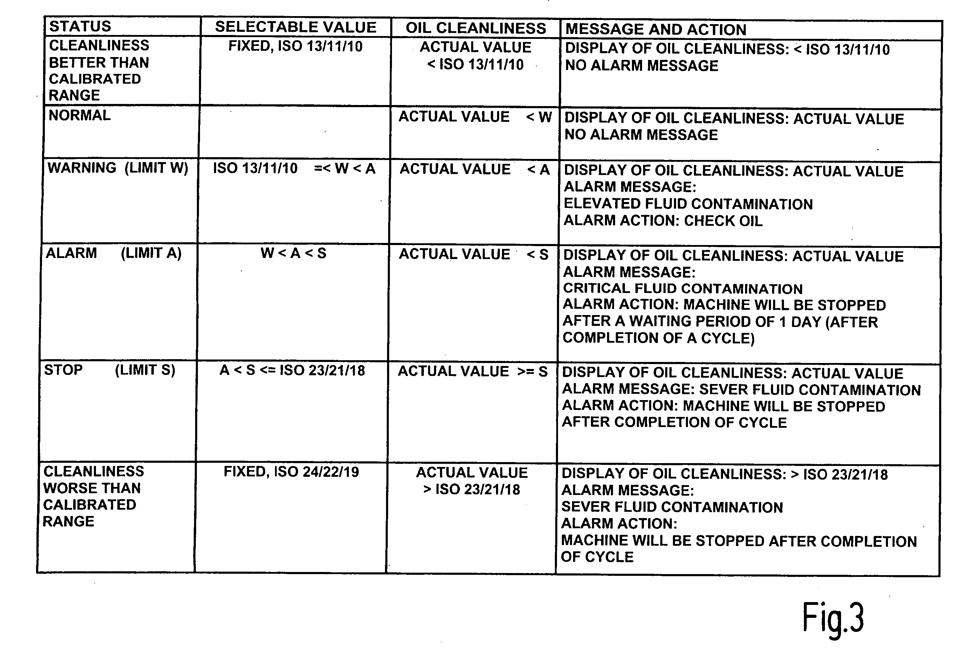

Fig. 3 shows a table for clarification of threshold values 22, 24, W, A, S incorporated in an embodiment of the invention. Being more detailed than the illustration in fig. 2, the table in fig. 3 clarifies the relation between threshold values 22, 24, W, A, and S, and the generated message and generated signal by the inventive method depending upon the present value of cleanliness of the fluid. Threshold values 22, 24, W, A, S here also being called limits. From the top to the down in table in fig. 3 the information presented concerns a present cleanliness better than the calibrated range, i. e. the ISO class is lower than the first threshold value 22 up to a cleanliness worse than the calibrated range, i. e. the present cleanliness class is greater than the second threshold value 24.

Within the first column of the table general status information is given. The second column shows the relation between the different threshold values 22, 24, W, A, S which has been explained in connection with fig. 2. The third column shows under which condition an actual or current value of the ISO class, representing the actual or current cleanliness, leads to the message and action shown in the column right to the column describing the actual or current value.

It has been found that during the first measuring cycles, in particular after activating the system, the particle counter 10 has to be flushed to remove air and to run a self-calibration procedure. During that period the message "device error" (4,0 mA to 4,8 mA outputted via input/output unit 18) is displayed and has to be ignored. For the purpose of illustration a measurement cycle here is set to be one minute. In an embodiment, recording of valid measurements can only start after a predetermined number of cycles, e.g. after five cycles corresponding to five minutes.

To avoid nuisance alarms due to short passing of threshold or false reading, in particular in a running system 1, an alarm with the related alarm message or action should only be after a predetermined number of cycles, e.g. after five cycles corresponding to five minutes.

Alarm messages can be cleared by switching a power supply of a fluid pump motor connected to the system 1, and/or of said particle counter 10, and/or of said EDP unit 12, and/or of said control unit 14, and/or of said input/output unit 18. In an embodiment of the invention measured cleanliness values are stored with time and date to allow data history analysis. A chart can be created to visualize the trend of the fluid cleanliness.

In one embodiment of the invention internal errors of said particle counter 10, and/or of said EDP unit 12, and/or of said control unit 14, and/or of said display unit 16, and/or of said input/output unit 18 are communicated with the current signal of input/output unit 18 as well.

With oil cleanliness being better than class ISO 13/11/10, flow rate errors (4.3 mA to 4.5 mA or 19.5 mA to 19.7 mA) may occur temporarily, as the flow rate is calculated from the particle speed and size. In one embodiment of the invention flow rate of said fluid is calculated from the particle speed and the particle size.

In one embodiment of the invention flow rate errors are only displayed when occurring during more than five or ten consecutive measurement periods, in particular more than 20 consecutive measurement periods, while the machine 2 is working.

In one embodiment of the invention the flow rate error is ignored for one hour if the last valid measuring value is below ISO 13/11/10. After one hour a warning "check sensor flow" is generated. As soon as the flow is in requested condition, measuring is restarted without a reset of particle counter 10.

## Claims

1. A method for evaluating contamination measurement values of solid particle (6) contamination in fluids in a system (1), in particular in hydraulic and/or lubricating fluids, wherein said contamination measurement values being represented by counting, within a volume of said fluid, at least one number of particles (6) having a particle size in at least one predetermined particle size range, said method for evaluating comprising the steps of:
• comparing said counted number with at least one predetermined threshold value (22, 24, W, A, S) resulting in a present comparison result,
• reading a previous comparison result corresponding to a previous counted number from a history file,
• choosing an appropriate control signal to control said system (1), said choice being based on said present comparison result and at least one previous comparison result.

2. The method of claim 1 or any of the above claims, wherein said at least one predetermined threshold value (22, 24, W, A, S) represents a cleanliness level which is chosen to be within a calibrated range for which said counted number is valid.

3. The method of claim 2, wherein a first threshold value (22) is chosen to be equal to a lower end of said calibrated range corresponding to a high cleanliness of said fluid.

4. The method of claim 3, wherein for the case that said present comparison result corresponds to a cleanliness better than said calibrated range and at least one of said previous counted numbers have been close to said first threshold value (22), a signal is generated indicating that the cleanliness being better than said first threshold value (22).

5. The method of claim 2, wherein a second threshold value (24) is chosen to be equal to an upper end of said calibrated range corresponding to a low cleanliness of said fluid.

6. The method of claim 5, wherein for the case that said present comparison result corresponds to a cleanliness worse than said calibrated range and at least one of said previous counted numbers have been close to said second threshold value (24), a signal is generated indicating that the cleanliness being worse than said second threshold value (24).

7. The method of claim 6, wherein an alarm message concerning severe fluid contamination is initiated and/or an alarm action is initiated, in particular an alarm action to stop said system (1) after completion of a working-cycle of said system (1).

8. The method of claim 1 or any of the above claims, wherein at least one further threshold value is arranged between said first and said second threshold value (22, 24), preferably a third threshold value (W), a fourth threshold value (A), and a fifth threshold value (S) are arranged between said first and said second threshold value (22, 24) to define limits for an initiation of a display of cleanliness, and/or initiation of status messages like NORMAL, WARNING, ALARM or STOP, and/or of actions like "check fluid" or "stop machine".

9. The method of claim 1 or any of the above claims, wherein the initiation of an action is triggered only if a settable number of consecutive comparison results are equal.

10. The method of claim 1 or any of the above claims, wherein said contamination measurement values are stored with time and date information into said history file.

11. The method of claim 1 or any of the above claims, wherein flow rate errors of said fluid are only displayed when occurring during multiple consecutive measurement periods, e.g. during more than five or ten consecutive measurement periods while the system is working.

12. An apparatus for evaluating contamination measurement values of solid particle (6) contamination in fluids in a system (1), in particular in hydraulic and/or lubricating fluids, wherein said contamination measurement values being represented by counting, within a volume of said fluid, at least one number of particles (6) having a particle size in at least one predetermined particle size range, said apparatus comprising:
• means for comparing said counted number with at least one predetermined threshold value (22, 24, W, A, S) resulting in a present comparison result,
• means for reading a previous comparison result of at least one previous counted number from a history file,
• means for choosing an appropriate control signal to control said system (1), said choice being based on said present comparison result and at least one previous comparison result.

13. A software program or product, preferably stored on a data carrier, for controlling or executing the method of claim 1 or any of claims 2 to 11, when run on a data processing system such as a computer.
